# EUROPEAN PATENT SPECIFICATION

(11) **EP 2 057 907 B1**
(45) Date of publication and mention of the grant of the patent: **01.04.2015**
(21) Application number: 07805940.9
(22) Date of filing: 10.08.2007
(51) Int. Cl.: A23L 2/54, A23L 1/236, A23L 2/60

(54) **CARBONATED BEVERAGE AND METHOD OF PRODUCING CARBONATED BEVERAGE**
MIT KOHLENSÄURE VERSETZTES GETRÄNK UND VERFAHREN ZUR HERSTELLUNG EINES MIT KOHLENSÄURE VERSETZTEN GETRÄNKS
BOISSON GAZEUSE ET PROCÉDÉ DE PRODUCTION DE BOISSON GAZEUSE

(30) Priority: 11.08.2006 JP 2006219091; 16.11.2006 JP 2006309838
(43) Date of publication of application: 13.05.2009
(73) Proprietor: AJINOMOTO CO., INC., Chuo-ku Tokyo 104-8315 (JP)
(72) Inventor: YAMAMOTO, Yoko, Kanagawa 210-8681 (JP); YAMAMOTO, Yukiko, Kanagawa 210-8681 (JP); TOMIYAMA, Yasuyuki, Kangawa 210-8681 (JP)
(74) Representative: Nicholls, Kathryn Margaret
(86) International application number: PCT/JP2007/065994
(87) International publication number: WO 2008/018643

(56) References cited:
- EP-A1- 1 591 021
- JP-A- 60 199 365
- JP-A- 60 199 365
- JP-A- 2003 235 512
- JP-A- 2003 235 512
- JP-A- 2003 284 520
- JP-A- 2003 284 520
- US-A- 3 082 093
- US-A1- 2006 093 720

## Description

### Technical Field

The present invention relates to a high intensity sweetener-containing carbonated beverage having an improved taste, a method of improving the taste of a high intensity sweetener-containing carbonated beverage, and a method of producing a high intensity sweetener-containing carbonated beverage having an improved taste.

More particularly, it relates to a method of improving intense later sweetness, insufficient fullness of taste and weak early sweetness, which are defective qualities of sweetness of high intensity sweeteners such as aspartame and the like, which method includes adding lysine hydrochloride or low molecule agar, or both lysine hydrochloride and low molecule agar in combination, to high intensity sweetener-containing carbonated beverages, a carbonated beverage with high-quality flavor similar to that of carbonated beverages sweetened with sugar, and a production method of such carbonated beverage.

### Background Art

As a sweetener, sugar has long been used widely in view of its high-quality sweetness and properties such as fullness and the like. Due to the low calorie consciousness and health consciousness in recent years, however, sugar has been avoided since it causes obesity and decayed teeth. As a substitute sweetener for sugar, high intensity sweeteners such as aspartame, acesulfame potassium (hereinafter to be abbreviated as Ace-K) and the like have been attracting attention. Among the high intensity sweeteners, particularly, aspartame is widely used for carbonated beverages such as Diet Coke and the like, and the like, since it provides a high-quality sweetness.

High intensity sweeteners such as aspartame and the like are superior in that they contain low calories. When compared to sugar, however, they tend to show more intense later sweetness, less fullness, and weaker early sweetness. Thus, a food containing a high intensity sweetener such as aspartame and the like has defects of 1) intense later sweetness, 2) weak early sweetness, 3) thin taste due to failure to ensure fullness of taste, and the like. Accordingly, there is a demand for a technique which improves the quality of sweetness of the high intensity sweeteners such as aspartame and the like by some method, and provides a flavor as close as possible to that of sugar.

To improve quality of taste of high intensity sweeteners such as aspartame and the like, which show intense later sweetness, insufficient fullness and weak early sweetness, conventionally, many methods of improving the quality of taste by combining the high intensity sweeteners with a material such as sweetener, acidulant, amino acid, vitamin, mineral, polysaccharide, flavor and the like have been tried. Particularly, as methods of improving the taste of aspartame which is most widely used as a high intensity sweetener, the following techniques have been reported.

For example, a method of improving taste by co-using gelatin (see JP-A-57-152862), a method of improving taste by co-using sugar alcohol such as sorbitol and the like (see JP-A-63-12263), a method of improving taste by co-using sodium chloride (see JP-A-61-212257), and a method of improving taste by co-using amino acid (see JP-B-3436706 and JP-A-2003-235512) can be recited.

However, since gelatin is derived from an animal such as bovine and the like, it is associated with a risk of BSE problem. In addition, when used for carbonated beverages such as Coke and the like, gelatin causes problems of precipitation and the like. Sugar alcohols such as sorbitol and the like ingested in large amounts cause laxative action, and increase calories, though not to the level of sugar. Use of sodium chloride may elevate the blood pressure due to ingestion of sodium.

The closest and highly effective prior art seems to be the technique described in JP-B-3436706 and JP-A-2003-235512. However, neither of them consider the way to bring the quality of taste of aspartame closer to that of sugar and, in fact, they provide no description of the use of 1) lysine hydrochloride, 2) low molecule agar, or 3) both lysine hydrochloride and low molecule agar for carbonated beverages together with aspartame, unlike the present invention.

As mentioned above, improvement of the taste of aspartame has been considered. Nevertheless, since evaluation systems are different and the evaluation criteria are not common, highly universal principle concept has not been presented. As the situation stands, therefore, although the demand for improved quality of taste of aspartame and flavor of sugar is high, such has not been realized.

### Disclosure of the Invention

### Problems to be Solved by the Invention

The present invention aims to provide 1) a method of reducing the later taste and imparting fullness and early sweetness of high intensity sweeteners represented by aspartame, which have intense later sweetness, insufficient fullness of taste, and weak early sweetness, 2) a carbonated beverage with high-quality flavor similar to that of carbonated beverages sweetened with sugar, and 3) a production method of such carbonated beverage.

The present inventors have studied as many combinations as possible of aspartame and various amino acids and/or polysaccharides, each having specific taste, and evaluated them in a predetermined evaluation system with predetermined evaluation criteria, in an attempt to solve the aforementioned problems and found that a combination of aspartame and a particular amount of lysine hydrochloride and/or low molecule agar can improve the later sweetness, and impart fullness and early sweetness, and produce a high intensity sweetener-containing carbonated beverage having a high-quality flavor similar to that of carbonated beverages sweetened with sugar, which resulted in the completion of the present invention. Accordingly, the detail of the present invention is as follows.

(1) An high intensity sweetener-containing carbonated beverage improved in taste, which comprises 0.005 wt% - 0.9 wt% of lysine hydrochloride and/or 0.001 wt% - 0.2 wt% of having an average molecular weight of 10,000 - 100,000 agar, wherein the high intensity sweetener affords a sweetness corresponding to that afforded by 3 wt% - 15 wt% of sugar.
(2) The carbonated beverage of (1), wherein the high intensity sweetener is aspartame.
(3) The carbonated beverage of (1), wherein the high intensity sweetener is a combination of aspartame and acesulfame potassium.
(4) The carbonated beverage of (1), wherein the low molecule agar has an average molecular weight of 10,000 - 100,000.
(5) A method of producing a high intensity sweetener-containing carbonated beverage improved in taste, which comprises adding 0.005 wt% - 0.9 wt% of lysine hydrochloride and/or 0.001 wt% - 0.2 wt% of agar having an average molecular weight of 10,000 - 100,000 during production of the carbonated beverage, which has a sweetness achieved by the high intensity sweetener and corresponding to that afforded by 3 wt% - 15 wt% of sugar.
(6) The production method of (5), wherein the high intensity sweetener is aspartame.
(7) The production method of (5), wherein the high intensity sweetener is a combination of aspartame and acesulfame potassium.
(9) A method of improving the taste of a high intensity sweetener-containing carbonated beverage, which comprises adding 0.005 wt% - 0.9 wt% of lysine hydrochloride and/or 0.001 wt% - 0.2 wt% of agar having an average molecular weight of 10,000 - 100,000 to the carbonated beverage, which has a sweetness achieved by the high intensity sweetener and corresponding to that afforded by 3 wt% - 15 wt% of sugar.
(10) The method of (9), wherein the high intensity sweetener is aspartame. (11) The method of (9), wherein the high intensity sweetener is a combination of aspartame and acesulfame potassium.

### Effect of the Invention

According to the present invention, addition of particular amount(s) of lysine hydrochloride and/or agar having an average molecular weight of 10,000 - 100,000 to a carbonated beverage sweetened with a high intensity sweetener such as aspartame and the like weakens the later sweetness and imparts fullness of taste and early sweetness, whereby a carbonated beverage with high-quality flavor similar to that of carbonated beverages sweetened with sugar can be provided.

### Brief Description of the Drawings

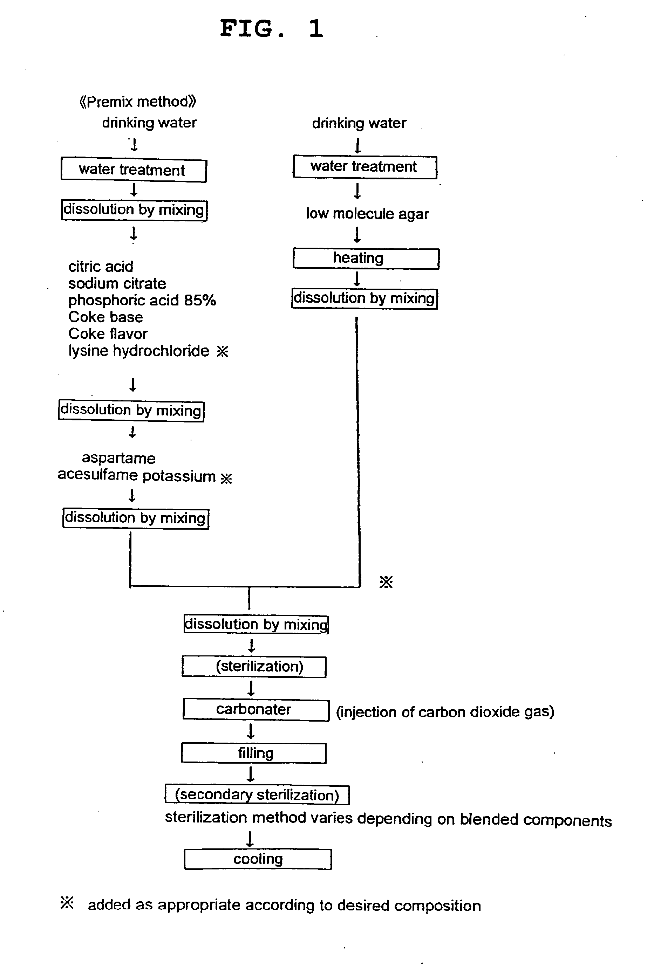

Fig. 1 is a flow chart showing the production of the carbonated beverage of the present invention.

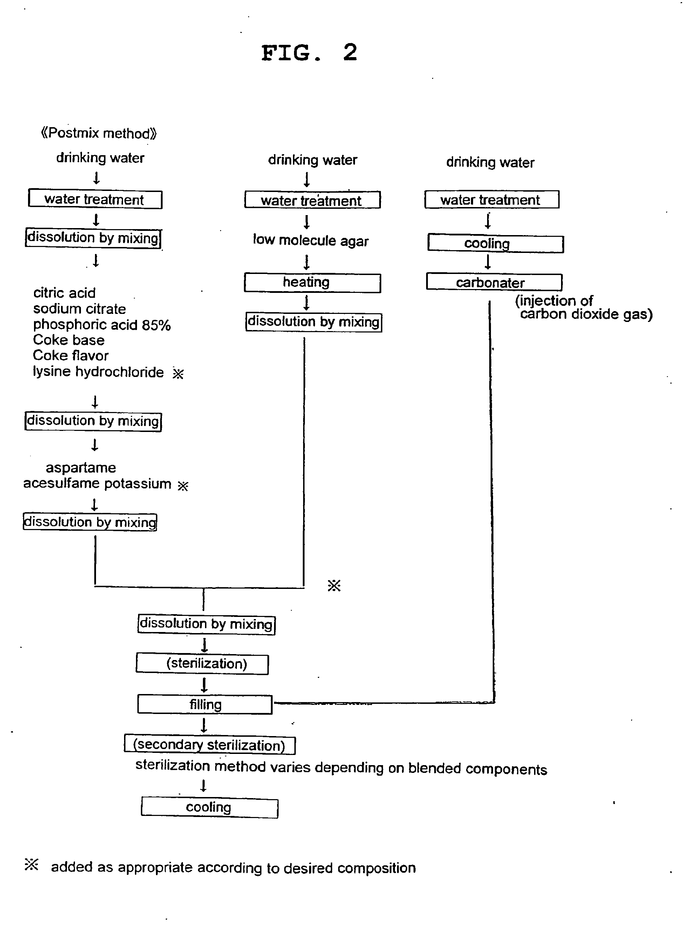

Fig. 2 is a flow chart showing the production of the carbonated beverage of the present invention.

### Detailed Description of the Invention

In the present invention, the high intensity sweetener may be, for example, aspartame or Ace-K. The high intensity sweetener with intense later sweetness, insufficient fullness of taste and weak early sweetness may be, for example, aspartame. An high intensity sweetener other than aspartame, which has intense later sweetness, insufficient fullness of taste and weak early sweetness, can also be used in the present invention (e.g., sucralose). In addition, aspartame and other high intensity sweetener may be used in combination. The detail of the combined use of aspartame and Ace-K is mentioned below.

The carbonated beverage of the present invention has a sweetness achieved by a high intensity sweetener, which corresponds to that afforded by 3 wt% - 15 wt%, preferably 8 wt% - 12 wt%, of sugar. The above-mentioned range is one example, and is not limited as long as it is acceptable as a level of sweetness of a carbonated beverage.

The inner gas pressure of the carbonated beverage of the present invention can be adjusted to 0.2 kgf/cm² - 10 kgf/cm², preferably 2 kgf/cm² - 6 kgf/cm², per a final product at 20°C. The above-mentioned range is one example, and is not limited as long as it is acceptable as a level of carbonation of a carbonated beverage.

The carbonated beverage of the present invention may be Coke, cider, fruit juice carbonated beverages and the like. The effect of the present invention is considered to be similarly applicable to noncarbonated beverages, such as sports drinks, lemonade, fruit juice drinks such as apple or orange juice and the like, and the like as appropriate.

In one embodiment of the present invention, a taste quality-improving material for high intensity sweetener-containing carbonated beverages is lysine hydrochloride. Particularly, it is effective as a taste quality-improving material for the later sweetness.

While the amount of lysine hydrochloride to be used is not particularly limited, 0.005 wt% - 0.9 wt%, preferably 0.05 wt% - 0.5 wt%, more preferably 0.09 wt% - 0.3 wt%, is generally added to a high intensity sweetener-containing carbonated beverage. Using within this range, the effects of the invention can be afforded, which are weakened later sweetness, imparted fullness and early sweetness of a high intensity sweetener such as aspartame and the like, and a flavor closer to that of sugar. In contrast, when the amount of lysine hydrochloride to be used is less than 0.005 wt%, the effect is hardly expressed, and when it exceeds 0.9 wt%, carbonated beverages themselves unpreferably develop discordant flavors.

Examples of other lysine salt include lysine sulfate, lysine glutamate, and the like, which can be appropriately used as substitutes of lysine hydrochloride. Moreover, lysine not in the form of salt can also be used. However, they each have specific taste, and lysine hydrochloride shows the highest effect.

Lysine hydrochloride can be used alone, or in combination with other taste quality-improving materials.

In another embodiment of the present invention, a taste quality-improving material for the high intensity sweetener-containing carbonated beverage is low molecule agar. It is effective as a taste quality-improving material which particularly improves fullness of taste.

In the present invention, the low molecule agar is different from ordinary agar and means one having an average molecular weight of 10,000 - 100,000, preferably 20,000 - 60,000, wherein molecules of agar components (agarose and agaropectin) have been cut short. Different from ordinary agar, it has low gel strength, special texture and taste. Low molecule agar is available from, for example, Ina Food Industry Co., Ltd. In the present specification, the average molecular weight means a weight average molecular weight.

While the amount of the low molecule agar to be used is not particularly limited, it is generally added in an amount of 0.001 wt% - 0.2 wt%, preferably 0.005 wt% - 0.1 wt%, more preferably 0.02 wt% - 0.06 wt%, relative to a high intensity sweetener-containing carbonated beverage. Using within this range, the effects of the invention can be afforded, which are weakened later sweetness, imparted fullness and early sweetness of a high intensity sweetener such as aspartame and the like, and a flavor closer to that of sugar. In contrast, when the amount of the low molecule agar to be used is less than 0.001 wt%, the effect is hardly expressed, and when it exceeds 0.2 wt%, carbonated beverages themselves develop discordant flavors, and a further increased amount of addition causes unpreferable coagulation.

Low molecule agar can be used alone, or in combination with other taste quality-improving materials.

In a still another embodiment of the present invention, a combination of lysine hydrochloride and agar having an average molecular weight of 10,000 to 100,000 are used as the taste quality-improving material for high intensity sweetener-containing carbonated beverages. Particularly, using lysine hydrochloride effective as a taste quality-improving material which improves later sweetness, and low molecule agar effective as a taste quality-improving material which improves fullness of taste in combination, the whole taste of a high intensity sweetener such as aspartame can be made closer to the flavor of sugar.

In a yet another embodiment of the present invention, a combination of aspartame and Ace-K can be used as the high intensity sweetener. The effect of lysine hydrochloride and low molecule agar can be further improved.

Ace-K is used in such an amount as to substitute the sweetness at a rate of 0.5 - 5, preferably 1 - 4, more preferably 2.5 - 3.5, relative to the intensity of sweetness provided by aspartame as 10. Using within this range, the effects of the invention can be afforded, which are weakened later sweetness, imparted fullness and early sweetness of aspartame, and a flavor closer to that of sugar.

Using all three components of Ace-K, lysine hydrochloride and low molecule agar in the above-mentioned particular amounts, the later sweetness of aspartame can be weakened, fullness of taste and early sweetness can be imparted, and a flavor closest to that of sugar can be afforded.

In addition, a material such as acidulant, sweetener, amino acid, vitamin, mineral, polysaccharide, flavor may be further added to the combination of a high intensity sweetener, lysine hydrochloride and/or low molecule agar.

The present invention also relates to a production method of a high intensity sweetener-containing carbonated beverage improved in taste. In one embodiment of the present invention, the material to be used and lysine hydrochloride are mixed with water, and carbon dioxide gas is injected thereinto to give a carbonated beverage of the present invention. In a further embodiment of the present invention, the material to be used is mixed with water, a low molecule agar solution separately prepared is added, and then carbon dioxide gas is injected thereinto to give a carbonated beverage of the present invention. Although the low molecule agar can be added as is, since it is dissolved by heating, a solution thereof is preferably prepared separately and used for mixing.

### Examples

The present invention is explained in the following by referring to Examples. However, the present invention is not limited to the following Examples.

### (Example 1) Preparation of Coke carbonated beverage containing aspartame and lysine hydrochloride

The blending compositions are shown in Table 1 and Table 2.

The preparation steps of Coke carbonated beverages are as follows. (1) Total starting material is measured and mixed. (2) Only the samples wherein lysine hydrochloride was added to an aspartame product (hereinafter to be referred to as APM product) are adjusted to pH 3.08 with phosphoric acid (same value as APM product). (3) Each sample (800 g) is placed in a soda siphon. (4) The soda siphon is cooled with ice water for about 1 hr. (5) Carbon dioxide gas (8 g) is injected into the soda siphon and a lid is put on the siphon. (6) The soda siphon is cooled overnight in a refrigerator. (7) The lid is removed from the soda siphon, about 150 g of the content of the siphon is dispensed to a can and the can is sealed. The inner gas pressure of the carbonated beverage thus prepared is 3 kgf/cm² - 4 kgf/cm² when measured at 20°C.

**Table 1: Compositions of Coke carbonated beverages**

| starting materials | control | | sample |
|---|---|---|---|
| | sugar product | APM product | lysine hydrochloride added product |
| granulated sugar | 10.00 | - | - |
| aspartame | - | 0.0729 | 0.0729 |
| citric acid | 0.025 | 0.025 | 0.025 |
| sodium citrate | 0.01 | 0.01 | 0.01 |
| phosphoric acid 85% | 0.03 | 0.03 | 0.03 |
| Coke base *1 | 0.20 | 0.20 | 0.20 |
| Coke flavor *1 | 0.10 | 0.10 | 0.10 |
| lysine hydrochloride | - | - | α (see Table 2) |
| phosphoric acid 85% *3 | - | - | appropriate amount |
| ion exchange water | balance | balance | balance |
| total | 100 | 100 | 100+α |
| APM sweetness | - | 137 times sweeter | 137 times sweeter |
| pH value (measurement results) | pH 2.76 | pH 3.08 | see Table 2 |

| | | | |
|---|---|---|---|
| In Table, the unit is (g). *1 Takasago International Corporation, Coke base W-6521 *2 Takasago International Corporation, Coke flavor M-80051 *3 adjusted to the same pH as APM product (pH 3.08) | | | |

**Table 2: Amount of lysine hydrochloride added and adjusted pH value of each sample**

| amount of lysine hydrochloride added (α) | pH value | |
|---|---|---|
| | before adjustment | after adjustment |
| (1) 0.01% addition | pH 3.08 | pH 3.08 |
| (2) 0.03% addition | pH 3.08 | |
| (3) 0.05% addition | pH 3.08 | |
| (4) 0.1% addition | pH 3.13 | |
| (5) 0.5% addition | pH 3.33 | |
| (6) 1.0% addition | pH 3.50 | |

### Evaluation of taste

Using a sugar product and an APM product having a similar sweetness (corresponding to 10 wt% of sugar) as control products, functional evaluation of Examples ((1) to (6) in Table 2) wherein lysine hydrochloride was added to APM product at a proportion of 0.01 wt% - 1.0 wt% per carbonated beverage, was performed by a panel of 3 specialists.

They were evaluated for the evaluation items of intensity of early sweetness, weakness of later sweetness, sharp sweetness, fullness of taste and similarity as a whole in 6 levels of point 0 to point 5 relative to APM product as 0 and sugar product as 5. The criteria of the effect evaluation are shown in the following.

⊙: very high effect as compared to lysine hydrochloride no addition product (APM product)
○: high effect as compared to lysine hydrochloride no addition product (APM product)
Δ: rather effective as compared to lysine hydrochloride no addition product (APM product)
×: strong unusual taste and effect unachievable as compared to lysine hydrochloride no addition product (APM product)

The results are shown in Table 3.

**Table 3: Results of functional evaluation (Coke carbonated beverages)**

| amount of lysine hydrochloride added (α) | intensity of early sweetness | weakness of later sweetness | sharp sweetness | fullness of taste | similarity as a whole | unusual taste (commented) | evaluation of effect |
|---|---|---|---|---|---|---|---|
| (1) 0.01% addition | 0.7 | 2.0 | 2.0 | 1.0 | 1.2 | none | Δ |
| (2) 0.03% addition | 1.3 | 2.3 | 2.3 | 2.0 | 2.0 | none | ○ |
| (3) 0.05% addition | 1.0 | 3.0 | 3.0 | 2.3 | 2.7 | none | ○ |
| (4) 0.1% addition | 2.3 | 3.7 | 3.3 | 2.7 | 2.8 | none | ⊙ |
| (5) 0.5% addition | 2.0 | 4.0 | 3.7 | 3.7 | 3.0 | somewhat unusual taste but tolerable | ○ |
| (6) 1.0% addition | 2.7 | 5.0 | 5.0 | 5.0 | measurement unavailable | very strong unusual taste | × |

The numbers in Table 3 reflect evaluation in 6 levels of point 0 to point 5 relative to APM product as 0 and sugar product as 5, where numbers closer to 0 mean being closer to the APM product and numbers closer to 5 mean being closer to the sugar product. As is clear from Table 3, lysine hydrochloride was confirmed to have effects of weakening the later sweetness of aspartame, imparting fullness, and providing a flavor closer to that of sugar.

### (Example 2) Preparation Coke carbonated beverage containing aspartame and low molecule agar

The blending compositions are shown in Table 4. The preparation steps of Coke carbonated beverages were similar to those of Example 1. The low molecule agar has effects of weakening the later sweetness of aspartame, imparting fullness, and providing a flavor closer to that of sugar.

### (Example 3) Preparation of Coke carbonated beverage containing aspartame, lysine hydrochloride and low molecule agar

The blending compositions are shown in Table 4. The preparation steps of Coke carbonated beverages were similar to those of Example 1. The combination of lysine hydrochloride and low molecule agar provides effects of weakening the later sweetness of aspartame, imparting fullness, intensifying the early sweetness and providing a flavor closer to that of sugar.

**Table 4: Compositions of Coke carbonated beverages (samples)**

| starting materials | sample | |
|---|---|---|
| | low molecule agar added product | low molecule agar, lysine hydrochloride added product |
| aspartame | 0.0729 | 0.0729 |
| citric acid | 0.025 | 0.025 |
| sodium citrate | 0.01 | 0.01 |
| phosphoric acid 85% | 0.03 | 0.03 |
| Coke base *1 | 0.20 | 0.20 |
| Coke flavor *1 | 0.10 | 0.10 |
| lysine hydrochloride | - | 0.10 |
| low molecule agar *3 | 0.05 | 0.05 |
| ion exchange water | balance | balance |
| total | 100 | 100 |

| | | |
|---|---|---|
| In Table, the unit is (g). *1 Takasago International Corporation, Coke base W-6521 *2 Takasago International Corporation, Coke flavor M-80051 *3 Ina Food Industry Co., Ltd., ULTRA AGAR "Ihna" | | |

The average molecular weight of ULTRA AGAR "Ihna" is about 50,000.

### (Example 4) Preparation of Coke carbonated beverage containing aspartame, Ace-K, lysine hydrochloride and low molecule agar

The blending compositions are shown in Table 5. The preparation steps of Coke carbonated beverages were similar to those of Example 1.

**Table 5: Compositions of Coke carbonated beverages (samples)**

| starting materials | sample | |
|---|---|---|
| | AK1 product | AK2 product (product of the present invention) |
| aspartame | 0.0263 | 0.0263 |
| Ace-K | 0.0113 | 0.0113 |
| citric acid | 0.025 | 0.025 |
| sodium citrate | 0.01 | 0.01 |
| phosphoric acid 85% | 0.03 | 0.03 |
| Coke base *1 | 0.20 | 0.20 |
| Coke flavor *2 | 0.10 | 0.10 |
| lysine hydrochloride | - | 0.10 |
| low molecule agar *3 | - | 0.05 |
| ion exchange water | balance | balance |
| total | 100 | 100 |

| | | |
|---|---|---|
| In Table, the unit is (g). *1 Takasago International Corporation, Coke base W-6521 *2 Takasago International Corporation, Coke flavor M-80051 *3 Ina Food Industry Co., Ltd., ULTRA AGAR "Ihna" | | |

The average molecular weight of ULTRA AGAR "Ihna" is about 50,000.

### Evaluation of taste

One sweetened with aspartame and Ace-K at a sweetness ratio of 7:3 (AK1 product) and one obtained by adding lysine hydrochloride and low molecule agar (average molecular weight 20,000 - 60,000) to AK1 product (AK2 product) were used as samples. The functional evaluation was performed by a panel of 10 specialists.

They were evaluated for each evaluation item in 6 levels of point 0 to point 5 relative to APM product (see Table 1) as 0 and sugar product (see Table 1) as 5. The results are shown in Table 6.

**Table 6: Functional evaluation results (AK1 product, AK2 product)**

| | intensity of early sweetness | weakness of later sweetness | sharp sweetness | fullness of taste | similarity as a whole |
|---|---|---|---|---|---|
| AK1 product | 2.8 | 2.0 | 2.0 | 2.2 | 2.1 |
| AK2 product (product of the present invention) | 3.3 | 3.2 | 3.5 | 3.0 | 3.1 |

The numbers in Table reflect evaluation in 6 levels of point 0 to point 5 relative to APM product as 0 and sugar product as 5, where numbers closer to 0 mean being closer to the APM product and numbers closer to 5 mean being closer to the sugar product. As is clear from Table 6, one containing lysine hydrochloride, low molecule agar and Ace-K in combination (AK2 product) was confirmed to have effects of weakening the later sweetness of aspartame, imparting fullness, intensifying the early sweetness, and coming closest to the flavor of sugar.

### Industrial Applicability

Addition of particular amount(s) of lysine hydrochloride and/or low molecule agar to a carbonated beverage sweetened with a high intensity sweetener such as aspartame and the like weakens the later sweetness of the high intensity sweetener and imparts fullness of taste and early sweetness, whereby a high-quality flavor similar to that of carbonated beverages sweetened with sugar can be provided.

## Claims

1. A high intensity sweetener-containing carbonated beverage improved in taste, which comprises 0.005 wt% - 0.9 wt% of lysine hydrochloride and/or 0.001 wt% - 0.2 wt% of agar having an average molecular weight of 10,000 - 100,000, wherein the high intensity sweetener affords a sweetness corresponding to that afforded by 3 wt% - 15 wt% of sugar.

2. The carbonated beverage of claim 1 wherein the amount of lysine hydrochloride is 0,05 wt% - 0.9 wt%.

3. The carbonated beverage of claim 1 or claim 2, wherein the high intensity sweetener is aspartame.

4. The carbonated beverage of claim 1 or claim 2, wherein the high intensity sweetener is a combination of aspartame and acesulfame potassium.

5. The carbonated beverage of any one of the preceding claims, wherein the agar has an average molecular weight of 20,000 - 60,000.

6. A method of producing a high intensity sweetener-containing carbonated beverage improved in taste, which comprises adding 0.005 wt% - 0.9 wt% of lysine hydrochloride and/or 0.001 wt% - 0.2 wt% of agar having an average molecular weight of 10,000 to 100,000 during production of the carbonated beverage, which has a sweetness achieved by the high intensity sweetener and corresponding to that afforded by 3 wt% - 15 wt% of sugar.

7. The method according to claim 6, wherein the amount of lysine hydrochloride is 0.05 wt% - 0.9 wt%.

8. The production method of claim 6 or claim 7, wherein the high intensity sweetener is aspartame.

9. The production method of claim 6 or claim 7, wherein the high intensity sweetener is a combination of aspartame and acesulfame potassium.

10. The production method of any one of claims 6 to 9, wherein the agar has an average molecular weight of 20, 000 - 60,000.

11. A method of improving the taste of a high intensity sweetener-containing carbonated beverage, which comprises adding 0.005 wt% - 0.9 wt% of lysine hydrochloride and/or 0.001 wt% - 0.2 wt% of agar having an average molecular weight of 10,000 to 100,000 to the carbonated beverage, which has a sweetness achieved by the high intensity sweetener and corresponding to that afforded by 3 wt% - 15 wt% of sugar.

12. The method of claim 11, wherein the amount of lysine hydrochloride is 0.05 wt% - 0.9 wt%.

13. The method of claim 11 or claim 12, wherein the high intensity sweetener is aspartame.

14. The method of claim 11 or claim 12, wherein the high intensity sweetener is a combination of aspartame and acesulfame potassium.

15. The method of any one of claims 11 to 14, wherein the agar has an average molecular weight of 20,000 - 60,000.

## Patentansprüche

1. Süßstoff hoher Intensität enthaltendes, mit Kohlensäure versetztes Getränk mit verbessertem Geschmack, welches 0,005 bis 0,9 Gew.-% Lysinhydrochlorid und/oder 0,001 bis 0,2 Gew.-% Agar eines mittleren Molekulargewichts von 10.000 bis 100.000 enthält, wobei der Süßstoff hoher Intensität eine Süße aufweist, die derjenigen von 3 bis 15 Gew.-% Zucker entspricht.

2. Mit Kohlensäure versetztes Getränk nach Anspruch 1, wobei die Menge an Lysinhydrochlorid 0,05 bis 0,9 Gew.-% ist.

3. Mit Kohlensäure versetztes Getränk nach Anspruch 1 oder 2, wobei der Süßstoff hoher Intensität Aspartam ist.

4. Mit Kohlensäure versetztes Getränk nach Anspruch 1 oder 2, wobei der Süßstoff hoher Intensität eine Kombination von Aspartam und Acesulfamkalium ist.

5. Mit Kohlensäure versetztes Getränk nach einem der vorstehenden Ansprüche, wobei der Agar ein mittleres Molekulargewicht von 20.000 bis 60.000 aufweist.

6. Verfahren zum Herstellen eines einen Süßstoff hoher Intensität enthaltenden, mit Kohlensäure versetzten Getränks mit verbessertem Geschmack, welches das Zugeben von 0,005 bis 0,9 Gew.-% Lysinhydrochlorid und/oder 0,001 bis 0,2 Gew.-% Agar eines mittleren Molekulargewichts von 10.000 bis 100.000 während der Herstellung des mit Kohlensäure versetzten Getränks umfasst, welches eine durch den Süßstoff mit hoher Intensität erzielte Süße aufweist, die derjenigen entspricht, die durch 3 bis 15 Gew.-% Zucker erhalten wird.

7. Verfahren nach Anspruch 6, wobei die Menge von Lysinhydrochlorid, 0,05 bis 0,9 Gew-% ist.

8. Herstellungsverfahren nach Anspruch 6 oder 7, wobei der Süßstoff hoher Intensität Aspartam ist.

9. Herstellungsverfahren nach Anspruch 6 oder 7, wobei der Süßstoff hoher Intensität eine Kombination von Aspartam und Acesulfamkalium ist.

10. Herstellungsverfahren nach einem der Ansprüche 6 bis 9, wobei der Agar ein mittleres Molekulargewicht von 20.000 bis 60.000 aufweist.

11. Verfahren zum Verbessern des Geschmacks eines einen Süßstoff hoher Intensität enthaltenden, mit Kohlensäure versetzten Getränks, welches das Zugeben von 0,005 bis 0,9 Gew.-% Lysinhydrochlorid und/oder 0,001 bis 0,2 Gew.-% Agar eines mittleren Molekulargewicht von 10.000 bis 100.000 zu dem mit Kohlensäure versetzten Getränk umfasst, welches eine durch den Süßstoff hoher Intensität erzielte Süße aufweist, die derjenigen entspricht, die durch 3 bis 15 Gew.-% Zucker erhalten wird.

12. Verfahren nach Anspruch 11, wobei die Menge an Lysinhydrochlorid 0,05 bis 0,9 Gew.-% ist.

13. Verfahren nach Anspruch 11 oder 12, wobei der Süßstoff hoher Intensität Aspartam ist.

14. Verfahren nach Anspruch 11 oder 12, wobei der Süßstoff hoher Intensität eine Kombination von Aspartam und Acesulfamkalium ist.

15. Verfahren nach einem der Ansprüche 11 bis 14, wobei der Agar ein mittleres Molekulargewicht von 20.000 bis 60.000 aufweist.

## Revendications

1. Boisson gazeuse contenant un édulcorant de haute intensité, au goût amélioré, qui comprend 0,005 % en poids à 0,9 % en poids de chlorhydrate de lysine et/ou 0,001 % en poids à 0,2 % en poids d'agar ayant un poids moléculaire moyen de 10 000 à 100 000, dans laquelle l'édulcorant de haute intensité donne un pouvoir sucrant correspondant à celui que donnent 3 % en poids à 15 % en poids de sucre.

2. Boisson gazeuse selon la revendication 1, dans laquelle la quantité de chlorhydrate de lysine est de 0,05 % en poids à 0,9 % en poids.

3. Boisson gazeuse selon la revendication 1 ou la revendication 2, dans laquelle l'édulcorant de haute intensité est l'aspartame.

4. Boisson gazeuse selon la revendication 1 ou la revendication 2, dans laquelle l'édulcorant de haute intensité est une combinaison d'aspartame et d'acésulfame potassium.

5. Boisson gazeuse selon l'une quelconque des revendications précédentes, dans laquelle l'agar a un poids moléculaire moyen de 20 000 à 60 000.

6. Méthode de production d'une boisson gazeuse contenant un édulcorant de haute intensité, au goût amélioré, qui comprend l'addition de 0,005 % en poids à 0,9 % en poids de chlorhydrate de lysine et/ou de 0,001 % en poids à 0,2 % en poids d'agar ayant un poids moléculaire moyen de 10 000 à 100 000, pendant la production de la boisson gazeuse, qui a un pouvoir sucrant conféré par l'édulcorant de haute intensité et correspondant à celui que donnent 3 % en poids à 15 % en poids de sucre.

7. Méthode selon la revendication 6, dans laquelle la quantité de chlorhydrate de lysine est de 0,05 % en poids à 0,9 % en poids.

8. Méthode de production selon la revendication 6 ou la revendication 7, dans laquelle l'édulcorant de haute intensité est l'aspartame.

9. Méthode de production selon la revendication 6 ou la revendication 7, dans laquelle l'édulcorant de haute intensité est une combinaison d'aspartame et d'acésulfame potassium.

10. Méthode de production selon l'une quelconque des revendications 6 à 9, dans laquelle l'agar a un poids moléculaire moyen de 20 000 à 60 000.

11. Méthode d'amélioration du goût d'une boisson gazeuse contenant un édulcorant de haute intensité, qui comprend l'addition de 0,005 % en poids à 0,9 % en poids de chlorhydrate de lysine et/ou de 0,001 % en poids à 0,2 % en poids d'agar ayant un poids moléculaire moyen de 10 000 à 100 000, à la boisson gazeuse, qui a un pouvoir sucrant conféré par l'édulcorant de haute intensité et correspondant à celui que donnent 3 % en poids à 15 % en poids de sucre.

12. Méthode selon la revendication 11, dans laquelle la quantité de chlorhydrate de lysine est de 0,05 % en poids à 0,9 % en poids.

13. Méthode selon la revendication 11 ou la revendication 12, dans laquelle l'édulcorant de haute intensité est l'aspartame.

14. Méthode selon la revendication 11 ou la revendication 12, dans laquelle l'édulcorant de haute intensité est une combinaison d'aspartame et d'acésulfame potassium.

15. Méthode selon l'une quelconque des revendications 11 à 14, dans laquelle l'agar a un poids moléculaire moyen de 20 000 à 60 000.
